# EUROPEAN PATENT APPLICATION

(11) **EP 4 727 236 A1**
(43) Date of publication of application: **15.04.2026**
(21) Application number: 23940126.8
(22) Date of filing: 08.06.2023
(51) Int. Cl.: H04W 72/0457

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2023/099196
(87) International publication number: WO 2024/250240

(57) **Abstract**

Provided in the embodiments of the present disclosure are an information processing method and apparatus, and a communication device and a storage medium. The information processing method, which is executed by means of a core network device, comprises: sending indication information to an access network device, wherein the indication information indicates bandwidth aggregation of a positioning reference signal.

## Description

### TECHNICAL FIELD

The present disclosure relates to, but is not limited to, the technical field of wireless communication, and in particular to, an information processing method and apparatus, a communication device and a storage medium.

### BACKGROUND

Positioning reference signals may include downlink Positioning Reference Signals (PRS) and uplink Sounding Reference Signals (SRS). Downlink positioning reference signals may be used for downlink positioning of terminals, and uplink sounding reference signals are used for uplink positioning of terminals.

### SUMMARY

Embodiments of the present disclosure provide an information processing method and apparatus, a communication device, and a storage medium.

A first aspect of the embodiments of the present disclosure provides an information processing method, performed by a core network device, and the method further includes:
sending indication information to an access network device, where the indication information indicates positioning reference signal bandwidth aggregation.

A second aspect of the embodiments of the present disclosure provides an information processing method, performed by an access network device, where the method includes:
receiving indication information, where the indication information indicates positioning reference signal bandwidth aggregation.

A third aspect of the embodiments of the present disclosure provides an information processing method, performed by a terminal, the method including:
sending assistance information; where the assistance information is used for a core network device to generate indication information; and the indication information indicates positioning reference signal bandwidth aggregation.

A fourth aspect of the embodiments of the present disclosure provides an information processing apparatus, where the apparatus further includes:
a first sending module, configured to send indication information to an access network device, where the indication information indicates positioning reference signal bandwidth aggregation.

A fifth aspect of the embodiments of the present disclosure provides an information processing apparatus, the apparatus including:
a receiving module, configured to receive indication information, where the indication information indicates positioning reference signal bandwidth aggregation.

A sixth aspect of the embodiments of the present disclosure provides an information processing apparatus, where the apparatus includes:
a second sending module, configured to send assistance information; where the assistance information is used for a core network device to generate indication information; and the indication information indicates positioning reference signal bandwidth aggregation.

A seventh aspect of the embodiments of the present disclosure provides a communication device, including a processor, a transceiver, a memory, and an executable program stored in the memory and capable of being executed by the processor, where the processor, when running the executable program, performs the information processing method provided in the first, second, or third aspect described above.

An eighth aspect of the embodiments of the present disclosure provides a computer storage medium storing an executable program; the executable program, when executed by a processor, implements the information processing method provided in the first, second, or third aspect described above.

In the technical solutions provided by the embodiments of the present disclosure, a core network device may send indication information to an access network device, where the indication information indicates whether the access network device is to perform bandwidth aggregation of positioning reference signals. In this way, the access network device may generate, according to the indication information, a positioning reference signal configuration that supports positioning reference signal bandwidth aggregation or a positioning reference signal configuration that does not support positioning reference signal bandwidth aggregation, thereby enabling the positioning reference signal bandwidth aggregation to be smoothly implemented when necessary.

It should be understood that the foregoing general description and the following detailed description are exemplary and explanatory only and do not limit the embodiments of the present disclosure.

### BRIEF DESCRIPTION OF THE DRAWINGS

The accompanying drawings herein are incorporated into and constitute a part of the description, illustrate embodiments consistent with the present disclosure, and are used together with the description to explain the principles of the embodiments of the present disclosure.
FIG. 1 is a schematic diagram of a structural of a wireless communication system shown according to an exemplary embodiment;
FIG. 2A is a schematic flow chart of an information processing method shown according to an exemplary embodiment;
FIG. 2B is a schematic flow chart of an information processing method shown according to an exemplary embodiment;
FIG. 3A is a schematic flow chart of an information processing method shown according to an exemplary embodiment;
FIG. 3B is a schematic flow chart of an information processing method shown according to an exemplary embodiment;
FIG. 4A is a schematic flow chart of an information processing method shown according to an exemplary embodiment;
FIG. 4B is a schematic flow chart of an information processing method shown according to an exemplary embodiment;
FIG. 5 is a schematic diagram of a structure of an information processing apparatus shown according to an exemplary embodiment;
FIG. 6 is a schematic diagram of a structure of an information processing apparatus shown according to an exemplary embodiment;
FIG. 7 is a schematic diagram of a structure of an information processing apparatus shown according to an exemplary embodiment;
FIG. 8 is a schematic diagram of a structure of a terminal shown according to an exemplary embodiment; and
FIG. 9 is a schematic diagram of a structure of a network device shown according to an exemplary embodiment.

### DETAILED DESCRIPTION

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the embodiments of the present disclosure. To the contrary, they are merely examples of apparatuses and methods that are consistent with some aspects of the embodiments of the present disclosure.

Terms used in the embodiments of the present disclosure are used solely for the purpose of describing certain embodiments and are not intended to limit the embodiments of the present disclosure. The singular forms of "a/an", "said" and "the" used in the embodiments of the present disclosure are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, and such information should not be limited to these terms. These terms are only used to distinguish the same type of information from each other. For example, without departing from the scope of the embodiments of the present disclosure, the first message may also be referred to as the second information, and similarly, the second information may also be referred to as the first message. Depending on the context, the word "if" as used herein may be interpreted as "when..." or "while..." or "in response to determination".

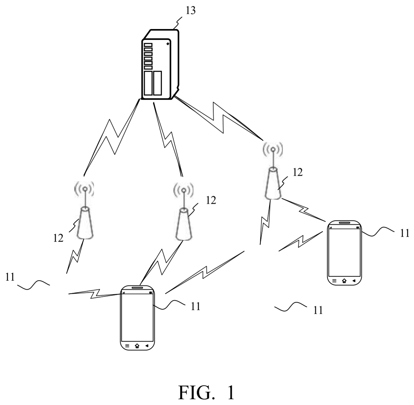

Referring to FIG. 1, a schematic structural diagram of a wireless communication system provided by an embodiment of the present disclosure is illustrated. As shown in FIG. 1, the wireless communication system is a communication system based on cellular mobile communication technology, and the wireless communication system may include: a plurality of UEs 11, a plurality of access devices 12 and a plurality of core network devices 13.

The UE 11 may refer to a device that provides voice and/or data connectivity to a user. The UE 11 may communicate with one or more core networks via a radio access network (RAN). The UE 11 may be an Internet of Things (IoT) UE, such as a sensor device, a mobile phone (or a cellular phone), and a computer with an IoT UE. For example, it may be a fixed, portable, pocket-sized, handheld, computer-built-in, or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the UE 11 may also be a device of an unmanned aerial vehicle. Alternatively, the UE 11 may also be a vehicle-mounted device, such as a driving computer with a wireless communication function, or a wireless communication device connected to an external driving computer. Alternatively, the UE 11 may also be a roadside device, for example, a street lamp, a signal lamp or other roadside device with a wireless communication function.

The access device 12 may be a network side device in a wireless communication system. The wireless communication system may be a 4th mobile communication technology (4G) system, also known as a long term evolution (LTE) system; or, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN). Alternatively, it may be an MTC system.

The access device 12 may be an evolved access device (eNB) used in a 4G system. Alternatively, the access device 12 may also be an access device (gNB) using a centralized and distributed architecture in a 5G system. When the access device 12 uses the centralized and distributed architecture, it usually includes a central unit (CU) and at least two distributed units (DUs). The central unit is provided with protocol stacks of a packet data convergence protocol (PDCP) layer, a radio link layer control protocol (Radio Link Control, RLC) layer, and a media access control (MAC) layer; and the distributed unit is provided with a protocol stack of a physical (PHY) layer. The specific implementation manner of the access device 12 is not limited by the embodiments of the present disclosure.

A wireless connection may be established between the access device 12 and the UE 11 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may also be a wireless air interface based on the next generation mobile communication network technology standard of 5G.

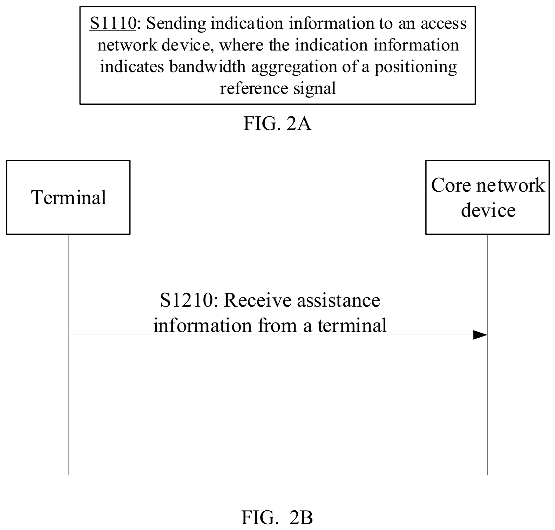

As shown in FIG. 2A, an embodiment of the present disclosure provides an information processing method, performed by a core network device, and the method further includes the following steps.

In S1110, indication information is sent to an access network device, where the indication information indicates positioning reference signal bandwidth aggregation.

The core network device may be any core network function that performs location management. The location management may include absolute and/or relative location management. For example, location management includes calculating the UE's location, providing positioning assistance information, obtaining positioning measurement results, sending positioning requests, and the like. For example, the core network device may include, but is not limited to, a Location Management Function (LMF).

The access network device may include: an eNB, a gNB and/or a Transmission and Receiving Point (TRP).

If the indication information indicates that bandwidth aggregation is to be performed on positioning reference signals, the access network device performs a positioning reference signal configuration capable of implementing bandwidth aggregation. The positioning reference signals may include: an uplink positioning reference signal (uplink sounding reference signal) and/or a downlink positioning reference signal.

Here, indicating that bandwidth aggregation is to be performed on positioning reference signals is equivalent to the terminal needing to send positioning reference signals of different frequencies and/or receive positioning reference signals of different frequencies when performing positioning measurements.

Such bandwidth aggregation may include: cross-band aggregation, cross-carrier aggregation, and cross-band width part (BWP) aggregation.

The positioning reference signals for bandwidth aggregation need to meet specified conditions to enable the terminal to perform bandwidth aggregation on the positioning reference signals and/or the access network device to perform bandwidth aggregation on the positioning reference signals.

The specified conditions may include: some parameters of any two or three positioning reference signals that need to be bandwidth aggregated need to be the same, and the parameters relate to the configuration of the positioning reference signals. Through the transmission of the indication information, the access network device may be guided to perform the corresponding positioning reference signal configuration.

In some embodiments, the positioning reference signal includes at least one of the following:
a downlink positioning reference signal (PRS); and
an uplink sounding reference signal (SRS).

In some embodiments, the indication information includes at least one of the following:
a first frequency band indication, indicating a frequency layer and/or carrier to be positioning reference signal bandwidth aggregated;
a first frequency band combination indication, indicating a frequency layer combination and/or carrier combination capable of being positioning reference signal bandwidth aggregated; and
first priority information, indicating a priority corresponding to the frequency layer combination or the carrier combination.

For example, bandwidth aggregation of PRSs of multiple different frequencies is performed on one frequency layer indicated by the first frequency band indication, or bandwidth aggregation of PRSs on multiple frequency layers indicated by the first frequency indication is performed. For another example, bandwidth aggregation of SRSs of multiple different subcarriers is performed on one carrier indicated by the first frequency band indication, or bandwidth aggregation of SRSs on multiple carriers indicated by the first frequency band indication is performed.

The first frequency band combination indication relates to a frequency layer combination or a carrier combination. A frequency band layer combination may include at least two frequency band layers, with different frequency band layers corresponding to different frequencies. A carrier combination may include multiple carriers, with different carriers having different frequencies.

For example, bandwidth aggregation of PRSs on some or all of the frequency layers indicated by the first frequency combination indication is performed.

As another example, bandwidth aggregation of SRSs on some or all of the carriers indicated by the first frequency combination indication is performed.

The first priority information indicates a priority. Different frequency layer combinations and/or carrier combinations have priorities.

The first priority information instructs the LMF to determine the frequency layer combination and/or carrier combination that should be preferentially used for bandwidth aggregation. In this way, the access network device preferentially selects the frequency layer combination and/or carrier combination with higher priority to perform bandwidth aggregation of PRSs and/or SRSs according to the first priority information.

For example, the first priority information is set based on frequency intervals between multiple frequency layers involved in the frequency layer combination, or based on frequency intervals between different carriers in the carrier combination. For example, if the magnitude of the frequency interval between any two frequency layers in the frequency layer combination is negatively correlated with the priority level, the bandwidth requirements supported by the antennas of the access network device and/or the terminal can be reduced.

For another example, the first priority information may be determined based on historical positioning information of each frequency layer combination and/or carrier combination. For example, the first priority information may be determined based on historical positioning accuracy, the higher the historical positioning accuracy, the higher the priority, and so on. Another example is that the first priority information is determined based on the signal quality of the positioning reference signal on the corresponding frequency layer combination or carrier combination. For example, the higher the signal quality, the higher the priority. Of course, these are merely examples of generating the first priority information, and the specific implementation is not limited to these examples.

For example, the indication information for the PRS includes one of the following:
the first frequency band indication, indicating a frequency layer of the PRS to be positioning reference signal bandwidth aggregated;
the first frequency band combination indication, indicating a frequency layer combination of the PRS capable of being positioning reference signal bandwidth aggregated; and
the first priority information, indicating a priority of the frequency layer combination of the PRS.

For example, the indication information for SRS includes one of the following:
the first frequency band indication, indicating a carrier of the SRS to be positioning reference signal bandwidth aggregated;
the first frequency band combination indication, indicating a carrier combination of the SRS capable of being positioning reference signal bandwidth aggregated; and
the first priority information, indicating a priority of the carrier combination of the SRS.

For example, the indication information is carried in a New Radio Positioning Protocol type a (NRPPa) message.

The NRPPa message may be a message using NRPPa communication, where NRPPa is a dedicated protocol for positioning-related purposes for communication between the LMF and base stations.

For example, the NRPPa message is a positioning information request message.

In some embodiments, the positioning information request message may be a message for the LMF to instruct the access network device to perform positioning. Using the positioning information request message to carry the indication information eliminates the need to use a dedicated message to carry the indication information, which can reduce the construction of new messages and has strong compatibility with related technologies.

In some embodiments, the indication information may also be sent from the LMF to the access network device via a dedicated NRPPa message.

As shown in FIG. 2B, an embodiment of the present disclosure provides an information processing method, performed by a core network device, and the method further includes the following steps.

In S1210, assistance information is received from a terminal.

For example, the assistance information may be used by the terminal to request positioning reference signal bandwidth aggregation.

For another example, the assistance information may be used by the LMF to determine whether to indicate the bandwidth aggregation of positioning reference signals and/or how to perform the bandwidth aggregation of the positioning reference signals. That is, the assistance information may be used by the LMF to determine the aforementioned indication information.

In some embodiments, after receiving the assistance information, the core network device such as the LMF may send the indication information with reference to the assistance information.

In other embodiments, the core network device such as the LMF may send the indication information without referring to the assistance information after receiving assistance information.

For example, the assistance information may be suggestion information provided by the terminal to the LMF for the bandwidth aggregation of positioning reference signals, according to the terminal's own capabilities and/or positioning requirements.

In yet some embodiments, the assistance information includes at least one of the following:
a second frequency band indication, indicating a frequency layer and/or carrier for which the terminal expects or supports positioning reference signal bandwidth aggregation;
a second frequency band combination indication, indicating a frequency layer combination and/or carrier combination for which the terminal expects or supports positioning reference signal bandwidth aggregation; and
second priority information, indicating a priority of the frequency layer combination and/or the carrier combination.

The terminal's requirements may be known through the reception of assistance information related to the desired frequency layer and/or carrier for the positioning reference signal bandwidth aggregation, or the desired frequency layer combination and/or carrier combination for the positioning reference signal bandwidth aggregation.

The capabilities of the terminal may be determined through the reception of the assistance information related to the supported frequency layer and/or carrier for the positioning reference signal bandwidth aggregation, or the supported frequency layer combination and/or carrier combination for the positioning reference signal bandwidth aggregation.

For example, the second frequency band indication will indicate that the terminal supports or expects bandwidth aggregation of PRSs of multiple different frequencies on one frequency layer, or the second frequency indication will indicate that the terminal supports or expects bandwidth aggregation of PRSs on multiple frequency layers. As another example, the second frequency band indication will indicate that the terminal supports or expects bandwidth aggregation of SRSs of multiple different subcarriers on one carrier, or the second frequency indication will indicate that the terminal supports or expects bandwidth aggregation of SRSs on multiple carrier layers.

The second frequency band combination indication relates to a frequency layer combination or a carrier combination. A frequency layer combination may include at least two frequency layers, and different frequency layers correspond to different frequencies. A carrier combination may include multiple carriers, and different carriers have different frequencies.

For example, bandwidth aggregation of PRSs on some or all of the frequency layers indicated by the second frequency combination indication is performed.

As another example, bandwidth aggregation of SRSs on some or all of the carriers indicated by the second frequency combination indication is performed.

The second priority information indicates a priority. Different frequency layer combinations and/or carrier combinations have priorities.

The second priority information indicates the frequency layer combination and/or carrier combination that the terminal desires to preferentially use for bandwidth aggregation. In this way, core network devices such as the LMF may generate the indication information according to the assistance information. For example, the first priority information and the like may be generated according to the second priority information.

For example, the second priority information is set according to the frequency intervals between multiple frequency layers involved in the frequency layer combination, or according to the frequency intervals between different carriers in the carrier combination. For example, if the magnitude of the frequency interval between any two frequency layers in the frequency layer combination is negatively correlated with the priority, the bandwidth requirements supported by the antennas of the access network device and/or the terminal can be reduced.

For another example, the second priority information may be determined according to historical positioning information of each frequency layer and/or carrier combination. For example, the second priority information is determined according to historical positioning accuracy; the higher the historical positioning accuracy, the higher the priority, and so on. Another example is that the second priority information is determined according to the signal quality of the positioning reference signal on the corresponding frequency layer combination or carrier combination. For example, the higher the signal quality, the higher the priority. Of course, the above are merely examples of generating the second priority information, and the specific implementation is not limited to the above examples.

In some embodiments, the assistance information includes: a Long Term Evolution Positioning Protocol (LPP) Request assistance request message.

In some embodiments, the indication information includes:
a frequency band number;
an offset relative to a reference frequency value and/or bandwidth; and
an identifier of a bandwidth part (BWP).

The frequency band number may be used to number various frequency bands. For example, N49, N97, or N48, and the like are all frequency band numbers that distinguish different frequency bands.

The reference frequency value may include a Point A and/or a Point B when performing frequency resource rasterization.

Different offset values relative to the same reference frequency value indicate different frequency band layers and/or carriers.

In some embodiments, offset values relative to a same reference frequency value are different and bandwidths are different, specifically referring to that center frequency points and bandwidths of frequency layers and/or carriers are different.

The system's frequency band resources may be divided into one or more BWPs, and these BWPs have respective identifiers. The identifier of the BWP includes, but is not limited to, the BWP number.

One or more of the frequency band number, offset value and/or bandwidth, and BWP identifier may serve as components of the aforementioned first frequency band indication and/or first frequency band indication combination. Of course, one or more of the frequency band number, offset value and/or bandwidth, and BWP identifier may also serve as components of the second frequency band indication and/or second frequency band indication combination.

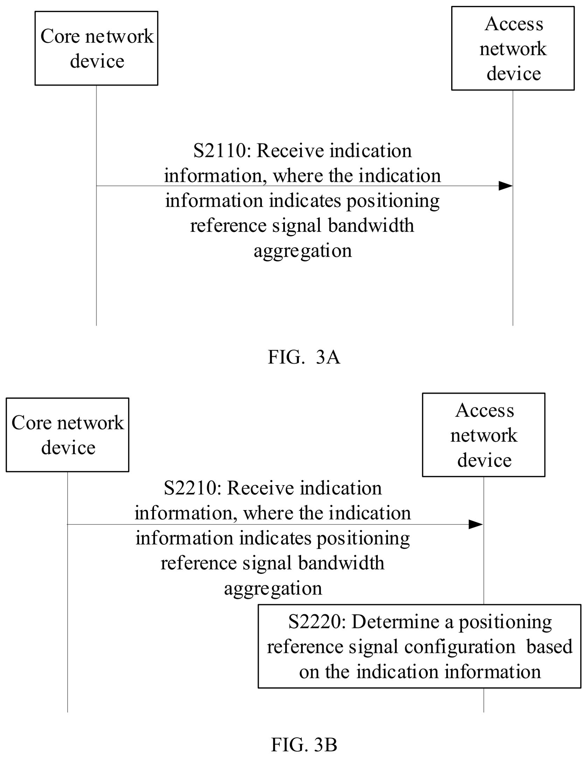

As shown in FIG. 3A, an embodiment of the present disclosure provides an information processing method, performed by an access network device, the method including the following steps.

In S2110, indication information is received, where the indication information indicates positioning reference signal bandwidth aggregation.

The access network device may be a base station, TRP, CU, and/or DU, etc.

In the embodiment of the disclosure, the access network device receives indication information from the core network device. For example, it receives indication information from the LMF.

The indication information may indicate bandwidth aggregation for the SRS and/or bandwidth aggregation for the PRS.

As shown in FIG. 3B, an embodiment of the present disclosure provides an information processing method, performed by an access network device, the method including the following steps.

In S2210, indication information is received, where the indication information indicates positioning reference signal bandwidth aggregation.

In S2220, a positioning reference signal configuration is determined based on the indication information.

The reference signal configuration may include an SRS configuration and/or a PRS configuration.

For example, determining the positioning reference signal configuration based on the indication information may include: when the indication information indicates positioning reference signal bandwidth aggregation, determining the positioning reference signal configuration based on the conditions that the positioning reference signal bandwidth aggregation needs to meet.

The conditions that the positioning reference signal bandwidth aggregation needs to meet may include: at least some parameters of any two positioning reference signals that can be bandwidth aggregated must be the same.

For the PRS, the same parameters for the two or three positioning reference signals that require bandwidth aggregation may include, but are not limited to, at least one of the following:
antenna port;
periodicity and offset, for example, the periodicity and offset are primarily for periodic PRS and/or semi-persistent PRS;
muting pattern: a pattern that does not send the PRS;
number of PRS resource sets;
number of PRS resources;
offset value, for example, the NR-DL-PRS-SFN0-Offset value, which is the offset of the time-domain position of the PRS relative to system frame #0 and slot #0; and
PRS pattern, which may be a frequency pattern of the PRS on the same time-domain resource; and this PRS pattern capable of being used to determine the time-frequency domain resource for sending the PRS.

For the SRS, the same parameters of the two or three positioning reference signals that require bandwidth aggregation may include, but are not limited to, at least one of the following:

Timing Advance (TA) or Timing Advance Group (TAG);
periodicity and offset, for example, the periodicity and offset are primarily for periodic SRS and/or semi-persistent SRS;
slot offset: the number of slots between the Downlink Control Information (DCI) that triggers the positioning reference signal and the SRS Resource Set; the slot offset may be mainly for aperiodic SRS. The aperiodic SRS may include dynamically scheduled SRS;
SRS resource set;
the same number of SRS;
pathloss configuration;
parameters for determining the power of each subcarrier, which may include P0 and/or α in the calculation formula;
antenna port;
SRS pattern: the SRS pattern may be the frequency pattern of SRSs on the same time-domain resource. The SRS pattern can be used to determine the time-frequency resources for sending SRSs.

In this way, the LMF may instruct the access network device the indication information based on terminal capabilities and/or positioning requirements, etc., facilitating the determination of whether to perform bandwidth aggregation when configuring positioning reference signals, thereby making full use of terminals with different capabilities for positioning measurements and/or meeting different positioning requirements.

For example, if the LMF needs to perform positioning measurement of the first accuracy level on the terminal, it may send indication information to the access network device and instruct the positioning measurement using positioning reference signals. For another example, if the LMF needs to perform positioning measurement of the second accuracy level on the terminal, and the positioning measurement of the second accuracy level can be satisfied without performing bandwidth aggregation, it may not send the indication information to the access network device; in this way, after not receiving the indication information, the access network device will not perform positioning reference signal configurations related to bandwidth aggregation for positioning reference signals.

For example, the positioning reference signal includes at least one of the following:
a downlink positioning reference signal (PRS); and
an uplink sounding reference signal (SRS).

In some embodiments, the indication information includes at least one of the following:
a first frequency band indication, indicating a frequency layer and/or carrier to be positioning reference signal bandwidth aggregated;
a first frequency band combination indication, indicating a frequency layer combination and/or carrier combination capable of being positioning reference signal bandwidth aggregated; and
first priority information, indicating a priority corresponding to the frequency layer combination or the carrier combination.

For example, bandwidth aggregation of PRSs of multiple different frequencies is performed on one frequency layer indicated by the first frequency band indication, or bandwidth aggregation of PRSs on multiple frequency layers indicated by the first frequency indication is performed. For another example, bandwidth aggregation of SRSs of multiple different subcarriers is performed on one carrier indicated by the first frequency band indication, or bandwidth aggregation of SRSs one multiple carrier layers indicated by the first frequency indication is performed.

The first frequency band combination indication relates to a frequency layer combination or a carrier combination. A frequency band layer combination may include at least two frequency band layers, with different frequency band layers corresponding to different frequencies. A carrier combination may include multiple carriers, with different carriers having different frequencies.

For example, bandwidth aggregation of PRSs on some or all of the frequency layers indicated by the first frequency combination indication is performed.

As another example, bandwidth aggregation of SRSs on some or all of the carriers indicated by the first frequency combination indication is performed.

The first priority information indicates a priority. Different frequency layer combinations and/or carrier combinations have priorities.

The first priority information instructs the LMF to determine the frequency layer combination and/or carrier combination that should be preferentially used for bandwidth aggregation. In this way, the access network device preferentially selects the frequency layer combination and/or carrier combination with higher priority to perform bandwidth aggregation of PRSs and/or SRSs according to the first priority information.

For example, the first priority information is set based on frequency intervals between multiple frequency layers involved in the frequency layer combination, or based on frequency intervals between different carriers in the carrier combination. For example, if the magnitude of the frequency interval between any two frequency layers in the frequency layer combination is negatively correlated with the priority level, the bandwidth requirements supported by the antennas of the access network device and/or the terminal can be reduced.

For another example, the first priority information may be determined based on historical positioning information of each frequency layer and/or carrier combination. For example, the first priority information may be determined based on historical positioning accuracy, the higher the historical positioning accuracy, the higher the priority, and so on. Another example is that the first priority information is determined based on the signal quality of the positioning reference signal on the corresponding frequency layer combination or carrier combination. For example, the higher the signal quality, the higher the priority. Of course, these are merely examples of generating the first priority information, and the specific implementation is not limited to these examples.

In some embodiments, the indication information for the PRS includes one of the following:
the first frequency band indication, indicating a frequency layer of the PRS to be positioning reference signal bandwidth aggregated;
the first frequency band combination indication, indicating a frequency layer combination of the PRS capable of being positioning reference signal bandwidth aggregated; and
the first priority information, indicating a priority of the frequency layer combination of the PRS.

In some embodiments, the indication information for the SRS includes one of the following:
the first frequency band indication, indicating a carrier of the SRS to be positioning reference signal bandwidth aggregated;
the first frequency band combination indication, indicating a carrier combination of the SRS capable of being positioning reference signal bandwidth aggregated; and
the first priority information, indicating a priority of the carrier combination of the SRS

For example, the indication information is carried in a New Radio Positioning Protocol Type (NRPPa) message.

The NRPPa message may be a message using NRPPa communication, where NRPPa is a dedicated protocol for positioning-related purposes for communication between the LMF and base stations.

For example, the NRPPa message is a positioning information request message.

For example, the indication information includes:
a frequency band number;
an offset relative to a reference frequency value and/or bandwidth; and
an identifier of a bandwidth part (BWP).

The frequency band number may be used to number various frequency bands. For example, N49, N97, or N48, and the like are all frequency band numbers that distinguish different frequency bands.

The reference frequency value may include a Point A and/or a Point B when performing frequency resource rasterization.

Different offset values relative to the same reference frequency value indicate different frequency band layers and/or carriers.

In some embodiments, offset values relative to a same reference frequency value are different and bandwidths are different, specifically referring to that center frequency points and bandwidths of frequency layers and/or carriers are different.

The system's frequency band resources may be divided into one or more BWPs, and these BWPs have respective identifiers. The identifier of the BWP includes, but is not limited to, the BWP number.

One or more of the frequency band number, offset value and/or bandwidth, and BWP identifier may serve as components of the aforementioned first frequency band indication and/or frequency band indication combination. Of course, one or more of the frequency band number, offset value and/or bandwidth, and BWP identifier may also serve as components of the second frequency band indication and/or frequency band indication combination.

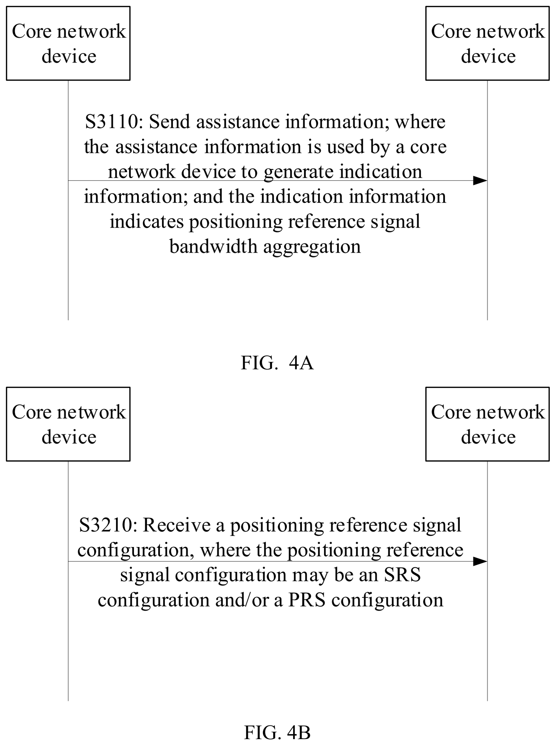

As shown in FIG. 4A, an embodiment of the present disclosure provides an information processing method, performed by a terminal, the method including the following steps.

In S3110, assistance information is sent; where the assistance information is used by a core network device to generate indication information; and the indication information indicates positioning reference signal bandwidth aggregation.

The terminal may be any type of communication device. The terminal may include fixed terminals and/or mobile terminals. The mobile terminals include, but are not limited to, mobile phones, tablets, wearable devices, smart home devices, smart office devices, in-vehicle devices, and/or flight devices.

The positioning reference signal may include, but is not limited to, an SRS and/or a PRS.

For example, the terminal sends the assistance information to the core network device. For example, the terminal sends the assistance information to the LMF.

For example, the assistance information may be carried in an LPP message sent to the core network device. Furthermore, the LPP message may include, but is not limited to, LPP assistance data.

For example, when performing access registration and/or registration update, the terminal sends a registration request and/or registration update request carrying the assistance information to the core network device. In this way, on the one hand, it realizes the terminal providing the core network device with the auxiliary information for determining the indication information; on the other hand, by being carried in the registration request and/or registration update request, it is equivalent to reusing the registration request and/or registration update request messages, thereby realizing the convenient transmission of information.

As shown in FIG. 4B, an embodiment of the present disclosure provides an information processing method, performed by a terminal, the method including the following steps.

In S3210, a positioning reference signal configuration is received, where the positioning reference signal configuration may be an SRS configuration and/or a PRS configuration.

The positioning reference signal configuration indicates whether to perform bandwidth aggregation of the positioning reference signal or not.

For example, the positioning reference signal configuration may be generated based on the indication information, and the indication information in turn is generated based on the assistance information.

In some embodiments, the assistance information includes at least one of the following:
a second frequency band indication, indicating a frequency layer and/or carrier for which the terminal expects or supports positioning reference signal bandwidth aggregation;
a second frequency band combination indication, indicating a frequency layer combination and/or carrier combination for which the terminal expects or supports positioning reference signal bandwidth aggregation; and
second priority information, indicating a priority of the frequency layer combination and/or the carrier combination.

The terminal's requirements may be known through the reception of assistance information related to the desired frequency layer and/or carrier for the positioning reference signal bandwidth aggregation, or the desired frequency layer combination and/or carrier combination for the positioning reference signal bandwidth aggregation.

The capabilities of the terminal may be determined through the reception of the assistance information related to the supported frequency layer and/or carrier for the positioning reference signal bandwidth aggregation, or the supported frequency layer combination and/or carrier combination for the positioning reference signal bandwidth aggregation.

For example, the second frequency band indication will indicate that the terminal supports or expects bandwidth aggregation of PRSs of multiple different frequencies on one frequency layer, or the second frequency indication will indicate that the terminal supports or expects bandwidth aggregation of PRSs on multiple frequency layers. As another example, the second frequency band indication will indicate that the terminal supports or expects bandwidth aggregation of SRSs of multiple different subcarriers on one carrier, or the second frequency indication will indicate that the terminal supports or expects bandwidth aggregation of SRSs on multiple carrier layers.

The second frequency band combination indication relates to a frequency layer combination or a carrier combination. A frequency layer combination may include at least two frequency layers, and different frequency layers correspond to different frequencies. A carrier combination may include multiple carriers, and different carriers have different frequencies.

For example, bandwidth aggregation of PRSs on some or all of the frequency layers indicated by the second frequency combination indication is performed.

As another example, bandwidth aggregation of SRSs on some or all of the carriers indicated by the second frequency combination indication is performed.

The second priority information indicates a priority. Different frequency layer combinations and/or carrier combinations have priorities.

The second priority information indicates the frequency layer combination and/or carrier combination that the terminal desires to preferentially use for bandwidth aggregation. In this way, core network devices such as the LMF may generate the indication information according to the assistance information. For example, the first priority information and the like may be generated according to the second priority information.

For example, the second priority information is set according to the frequency intervals between multiple frequency layers involved in the frequency layer combination, or according to the frequency intervals between different carriers in the carrier combination. For example, if the magnitude of the frequency interval between any two frequency layers in the frequency layer combination is negatively correlated with the priority, the bandwidth requirements supported by the antennas of the access network device and/or the terminal can be reduced.

For another example, the second priority information may be determined according to historical positioning information of each frequency layer and/or carrier combination. For example, the second priority information is determined according to historical positioning accuracy; the higher the historical positioning accuracy, the higher the priority, and so on. Another example is that the second priority information is determined according to the signal quality of the positioning reference signal on the corresponding frequency layer combination or carrier combination. For example, the higher the signal quality, the higher the priority. Of course, the above are merely examples of generating the second priority information, and the specific implementation is not limited to the above examples.

For the bandwidth aggregation of PRS and the bandwidth aggregation of SRS, there are some requirements for the PRS configurations of different frequency layers (PRS Frequency Layer, PFL) and the SRS configuration of different carriers participating in bandwidth aggregation.

For example, for the SRS, the same periodicity and offset, slot offset, and the like are required; for the PRS, the same periodicity, slot offset, muting pattern, and the like are required. Therefore, based on the process where the LMF instructs the gNB to perform PRS configuration or SRS configuration, the PRS configuration or SRS configuration determined by the gNB may not meet the conditions for performing bandwidth aggregation, thus failing to implement the bandwidth aggregation of PRS or SRS.

When the LMF requests PRS configuration from the gNB/TRP, it includes the indication information for PRS bandwidth aggregation, which may be referred to as an indication for short. The indication information includes:
indication of frequency layers for bandwidth aggregation;
if the indication information includes multiple frequency layer combinations for bandwidth aggregation, indicating the priority of each combination; and
the instruction being contained in an NRPPa message.

The NRPPa message may include, but is not limited to, a TRP request (TRP information request) and/or a PRS configuration request.

When the LMF requests the SRS configuration from the gNB/TRP, it includes the indication information for SRS bandwidth aggregation. The indication information may be simply referred to as an indication. The indication information includes:
indication of carriers for bandwidth aggregation;
if multiple carrier combinations for bandwidth aggregation are included, indicating the priority of each combination; and
the instruction being contained in an NRPPa message, which may include a positioning information request.

The LMF sends the indication information for positioning reference signal bandwidth aggregation to the gNB /TRP, the indication information including;
a downlink positioning reference signal (PRS) bandwidth aggregation indication; and
an uplink positioning reference signal (SRS) bandwidth aggregation indication.

The downlink positioning reference signal (PRS) bandwidth aggregation indication includes one of the following:
indication of frequency layers for bandwidth aggregation, e.g., requesting bandwidth aggregation of PRSs of f1 and f2;
if multiple frequency layer combinations for bandwidth aggregation are included, indicating the priority of each combination; for example, {f1, f2}, {f1, f3}, {f1, f2, f3}; and
TRP indication, where the TRP indication means instructing bandwidth aggregation of PRS resources of multiple frequency layers of the TRP.

The LMF communicates via the NRPPa message: a TRP information request and/or a PRS configuration request.

The UE sends the downlink positioning bandwidth aggregation request via LPP request assistance data.

The uplink positioning reference signal (SRS) bandwidth aggregation indication includes one of the following:
indication of carriers for bandwidth aggregation, e.g., requesting bandwidth aggregation of f1 and f2;
if multiple carrier combinations for bandwidth aggregation are included, indicating the priority of each combination; for example, {f1, f2}, {f1, f3}, {f1, f2, f3}; and
the instruction being sent via a Positioning information request in the NRPPa message.

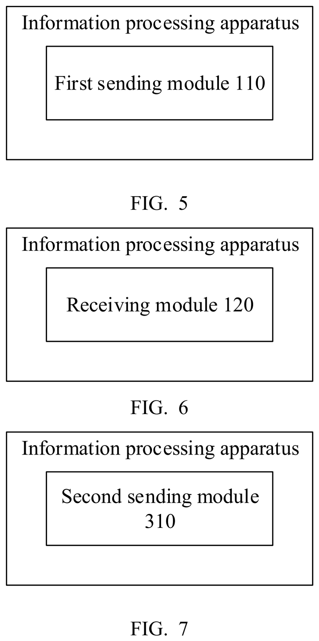

As shown in FIG. 5, an embodiment of the present disclosure provides an information processing apparatus, and the apparatus further includes:
a first sending module, configured to send indication information to an access network device, where the indication information indicates positioning reference signal bandwidth aggregation.

The information processing apparatus may be a core network device.

In some embodiments, the first sending module 110 may be a program module capable of sending the indication information.

In some embodiments, the first sending module 110 may be a software-hardware combined module; the software-hardware combined module includes, but is not limited to, a programmable array; the programmable array includes, but is not limited to, a field-programmable array and/or a complex programmable array.

In some embodiments, the first sending module 110 may be a pure hardware module; the pure hardware module includes, but is not limited to, a dedicated integrated circuit.

It should be understood that the positioning reference signal includes at least one of the following:
a downlink positioning reference signal (PRS); and
an uplink sounding reference signal (SRS).

It should be understood that the indication information includes at least one of the following:
a first frequency band indication, indicating a frequency layer and/or carrier to be positioning reference signal bandwidth aggregated;
a first frequency band combination indication, indicating a frequency layer combination and/or carrier combination capable of being positioning reference signal bandwidth aggregated; and
first priority information, indicating a priority corresponding to the frequency layer combination or the carrier combination.

It should be understood that the indication information for a PRS includes one of the following:
the first frequency band indication, indicating a frequency layer of the PRS to be positioning reference signal bandwidth aggregated;
the first frequency band combination indication, indicating a frequency layer combination of the PRS capable of being positioning reference signal bandwidth aggregated; and
the first priority information, indicating a priority of the frequency layer combination of the PRS.

It should be understood that the indication information for an SRS includes one of the following:
the first frequency band indication, indicating a carrier of the SRS to be positioning reference signal bandwidth aggregated;
the first frequency band combination indication, indicating a carrier combination of the SRS capable of being positioning reference signal bandwidth aggregated; and
the first priority information, indicating a priority of the carrier combination of the SRS.

It should be understood that the indication information is carried in a New Radio Positioning Protocol Type (NRPPa) message.

It should be understood that the NRPPa message is a positioning information request message.

It should be understood that the apparatus also includes:
a first receiving module, configured to receive assistance information from a terminal; where the assistance information is used to generate the indication information.

It should be understood that the assistance information includes at least one of the following:
a second frequency band indication, indicating a frequency layer and/or carrier for which the terminal expects or supports positioning reference signal bandwidth aggregation;
a second frequency band combination indication, indicating a frequency layer combination and/or carrier combination for which the terminal expects or supports positioning reference signal bandwidth aggregation; and
second priority information, indicating a priority of the frequency layer combination and/or the carrier combination.

It should be understood that the assistance information includes: a Long Term Evolution Positioning Protocol (LPP) Request assistance request message.

It should be understood that the indication information includes:
a frequency band number;
an offset relative to a reference frequency value and/or bandwidth; and
an identifier of a bandwidth part (BWP).

As shown in FIG. 6, an embodiment of the present disclosure provides an information processing apparatus, the apparatus including:
a receiving module 120, configured to receive indication information, where the indication information indicates positioning reference signal bandwidth aggregation.

The information processing apparatus may be an access network device.

The access network device includes, but is not limited to, an eNB, a gNB and/or a TRP.

In some embodiments, the receiving module 120 may be a program module which, after being executed by the processor, can realize the aforementioned operations.

In some embodiments, the receiving module 120 may be a software-hardware combined module; the software-hardware combined module includes, but is not limited to, various programmable arrays; the programmable array includes, but is not limited to, field-programmable arrays and/or complex programmable arrays.

In some embodiments, the receiving module 120 may include, but is not limited to, a pure hardware module; the pure hardware module includes, but is not limited to, an application-specific integrated circuit.

It should be understood that the positioning reference signal includes at least one of the following:
a downlink positioning reference signal (PRS); and
an uplink sounding reference signal (SRS).

It should be understood that the indication information includes at least one of the following:
a first frequency band indication, indicating a frequency layer and/or carrier to be positioning reference signal bandwidth aggregated;
a first frequency band combination indication, indicating a frequency layer combination and/or carrier combination capable of being positioning reference signal bandwidth aggregated; and
first priority information, indicating a priority corresponding to the frequency layer combination or the carrier combination.

It should be understood that the indication information for a PRS includes one of the following:
the first frequency band indication, indicating a frequency layer of the PRS to be positioning reference signal bandwidth aggregated;
the first frequency band combination indication, indicating a frequency layer combination of the PRS capable of being positioning reference signal bandwidth aggregated; and
the first priority information, indicating a priority of the frequency layer combination of the PRS.

It should be understood that the indication information for an SRS includes one of the following:
the first frequency band indication, indicating a carrier of the SRS to be positioning reference signal bandwidth aggregated;
the first frequency band combination indication, indicating a carrier combination of the SRS capable of being positioning reference signal bandwidth aggregated; and
the first priority information, indicating a priority of the carrier combination of the SRS.

It should be understood that the indication information is carried in a New Radio Positioning Protocol Type (NRPPa) message.

It should be understood that the NRPPa message is a positioning information request message.

It should be understood that the indication information includes:
a frequency band number;
an offset relative to a reference frequency value and/or bandwidth; and
an identifier of a bandwidth part (BWP).

It should be understood that the apparatus also includes:
a sending module, configured to determine a positioning reference signal configuration based on the indication information; where the positioning reference signal configuration is used for the transmission of positioning reference signals.

As shown in FIG. 7, an embodiment of the present disclosure provides an information processing apparatus, where the apparatus includes:
a second sending module 310, configured to transmit assistance information; where the assistance information is used by the core network device to generate indication information; and the indication information indicates positioning reference signal bandwidth aggregation.

The information processing apparatus may be a terminal. The terminal includes, but is not limited to, various tablet computers, mobile phones, in-vehicle devices, smart home devices, smart office devices, and/or flight devices.

In some embodiments, the second sending module 310 may be a program module; after being executed by the processor, the program module can perform the above operations.

In other embodiments, the second sending module 310 may be a software-hardware combined module; the software-hardware combined module includes, but is not limited to, various programmable arrays; the programmable array includes, but is not limited to, field-programmable arrays and/or complex programmable arrays.

In some embodiments, the second sending module 310 may be a purely hardware module, which includes, but is not limited to, an application-specific integrated circuit.

In some embodiments, the apparatus further includes:
a receiving module, configured to receive a positioning reference signal configuration generated based on the indication information.

Optionally, the assistance information includes at least one of the following:
a second frequency band indication, indicating a frequency layer and/or carrier for which the terminal expects or supports positioning reference signal bandwidth aggregation;
a second frequency band combination indication, indicating a frequency layer combination and/or carrier combination for which the terminal expects or supports positioning reference signal bandwidth aggregation; and
second priority information, indicating a priority of the frequency layer combination and/or the carrier combination.

The present disclosure provides a communication device, including:
a memory, configured to store processor-executable instructions; and
processors, respectively connected to the memory;
where the processor is configured to execute the information processing method provided by any of the aforementioned technical solutions.

The processor may include various types of storage media, which are non-transitory computer storage media that can continue to retain information stored thereon after the communication device loses power.

Here, the communication device includes: a UE or a network element, where the network element may be any one of the aforementioned first to fourth network elements.

The processor may be connected to the memory via a bus or the like, configured to read the executable program stored in the memory, for example, at least one of the methods as shown in FIGS. 2A, 2B, 3A, 3B, and 4A to 4B.

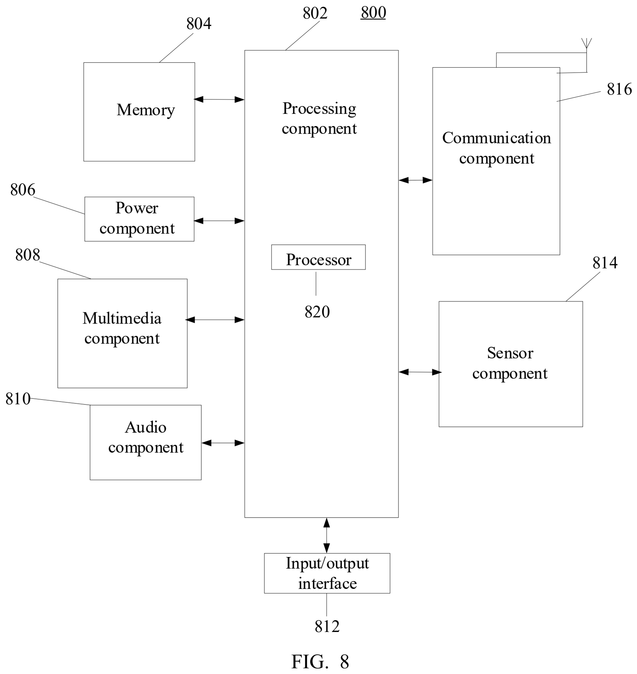

FIG. 8 is a block diagram of a terminal 800 according to an exemplary embodiment. For example, the UE 800 may be a mobile phone, a computer, a digital broadcast user equipment, a messaging device, a gaming console, a tablet device, a medical device, a fitness device, a personal digital assistant, and the like.

Referring to FIG. 8, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to generate all or part of the steps in the above-described methods. Moreover, the processing component 802 may include one or more modules which facilitate the interaction between the processing component 802 and other components. For example, the processing component 802 may include a multimedia module to facilitate the interaction between the multimedia component 3008 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For example, the sensor component 814 may detect an open/closed status of the device 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 804, executable by the processor 820 in the terminal 800, for generating the above-described methods. For example, the non-transitory computer-readable storage medium may be a ROM, a random access memory (RAM), a CD-ROM, a magnetic tape, a floppy disc, an optical data storage device, and the like.

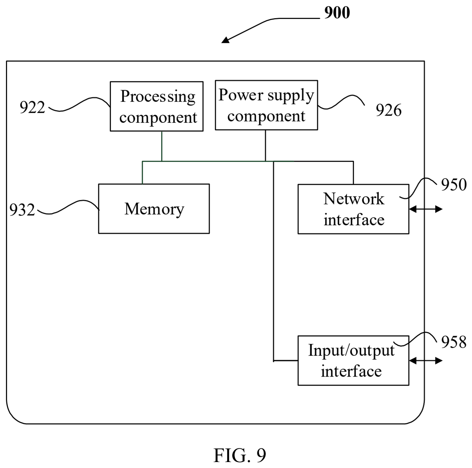

As shown in FIG. 9, one embodiment of the present disclosure shows a structure of a communication device. For example, the network device 900 may be provided as a network-side device. The communication device may be various network elements such as the aforementioned access network device and/or core network device.

Referring to FIG. 9, the network device 900 includes a processing component 922, which further includes one or more processors, and a memory resource represented by a memory 932 for storing instructions executable by the processing component 922, such as an application program. The application program stored in the memory 932 may include one or more modules, each corresponding to a set of instructions. In addition, the processing component 922 is configured to execute instructions to perform any of the above methods applied to the access device, such as at least one of the methods shown in FIG. 2A, FIG. 2B, FIG. 3A, FIG. 3B, and FIGS. 4A to 4B.

The network device 900 may further include a power component 926 configured to perform power management of the network device 900, a wired or wireless network interface 950 configured to connect the network device 900 to a network, and an input/output (I/O) interface 958. The network device 900 may operate based on an operating system stored in the memory 932, such as a Windows Server^{™}, a Mac OS X^{™}, a Unix^{™}, a Linux^{™}, a Free BSD^{™} or the like.

Where there is no contradiction, each step in a certain implementation manner or embodiment can be implemented as an independent embodiment, and the steps can be combined arbitrarily with each other. For example, the solution after removing some steps in a certain implementation manner or embodiment can also be implemented as an independent embodiment; and the order of the steps in a certain implementation manner or embodiment can be exchanged arbitrarily. Additionally, the optional manners or optional examples in a certain implementation manner or embodiment can be combined arbitrarily. Furthermore, the various implementation manners or embodiments can be combined arbitrarily with each other. For example, some or all steps of different implementation manners or embodiments can be combined arbitrarily; a certain implementation manner or embodiment can be combined arbitrarily with the optional manners or optional examples of other implementation manners or embodiments.

Other embodiments of the present disclosure will be apparent to those skilled in the art from consideration of the specification and practice of the contents disclosed here. The present disclosure is intended to cover any variations, uses, or adaptations of the embodiments of the present disclosure, which follows the general principles thereof and includes the common knowledge or habitual technical means in this technical field that is not disclosed in the present disclosure. The specification and embodiments are considered as exemplary only, with a true scope and spirit of the embodiments of the present disclosure being indicated by the appending claims.

It will be appreciated that the embodiments of the present disclosure are not limited to the exact construction that has been described above and illustrated in the accompanying drawings, and various modifications and changes can be made without departing from the scope thereof. The scope of the embodiments of the present disclosure is only limited by the appended claims.

## Claims

1. An information processing method, performed by a core network device, further comprising:
sending indication information to an access network device, wherein the indication information indicates positioning reference signal bandwidth aggregation.

2. The method according to claim 1, wherein the positioning reference signal comprises at least one of:
a downlink positioning reference signal (PRS); and
an uplink sounding reference signal (SRS).

3. The method according to claim 1 or 2, wherein the indication information comprises at least one of:
a first frequency band indication, indicating a frequency layer and/or carrier to be positioning reference signal bandwidth aggregated;
a first frequency band combination indication, indicating a frequency layer combination and/or carrier combination capable of being positioning reference signal bandwidth aggregated; and
first priority information, indicating a priority corresponding to the frequency layer combination or the carrier combination.

4. The method according to claim 3, wherein the indication information for a PRS comprises one of:
the first frequency band indication, indicating a frequency layer of the PRS to be positioning reference signal bandwidth aggregated;
the first frequency band combination indication, indicating a frequency layer combination of the PRS capable of being positioning reference signal bandwidth aggregated; and
the first priority information, indicating a priority of the frequency layer combination of the PRS.

5. The method according to claim 3, wherein the indication information for an SRS comprises one of:
the first frequency band indication, indicating a carrier of the SRS to be positioning reference signal bandwidth aggregated;
the first frequency band combination indication, indicating a carrier combination of the SRS capable of being positioning reference signal bandwidth aggregated; and
the first priority information, indicating a priority of the carrier combination of the SRS.

6. The method according to claim 1, wherein the indication information is carried in a New Radio Positioning Protocol Type (NRPPa) message.

7. The method according to claim 6, wherein the NRPPa message is a positioning information request message.

8. The method according to any one of claims 1 to 7, wherein the method further comprises:
receiving assistance information from a terminal; wherein the assistance information is used to generate the indication information.

9. The method according to claim 8, wherein the assistance information comprises at least one of:
a second frequency band indication, indicating a frequency layer and/or carrier for which the terminal expects or supports positioning reference signal bandwidth aggregation;
a second frequency band combination indication, indicating a frequency layer combination and/or carrier combination for which the terminal expects or supports positioning reference signal bandwidth aggregation; and
second priority information, indicating a priority of the frequency layer combination and/or the carrier combination.

10. The method according to claim 8 or 9, wherein the assistance information comprises: a Long Term Evolution Positioning Protocol (LPP) Request assistance request message.

11. The method according to any one of claims 1 to 10, wherein the indication information comprises:
a frequency band number;
an offset relative to a reference frequency value and/or a bandwidth; and
an identifier of a bandwidth part (BWP).

12. An information processing method, performed by an access network device, comprising:
receiving indication information, wherein the indication information indicates positioning reference signal bandwidth aggregation.

13. The method according to claim 12, wherein the positioning reference signal comprises at least one of:
a downlink positioning reference signal (PRS); and
an uplink sounding reference signal (SRS).

14. The method according to claim 12 or 13, wherein the indication information comprises at least one of:
a first frequency band indication, indicating a frequency layer and/or carrier to be positioning reference signal bandwidth aggregated;
a first frequency band combination indication, indicating a frequency layer combination and/or carrier combination capable of being positioning reference signal bandwidth aggregated; and
first priority information, indicating a priority corresponding to the frequency layer combination or the carrier combination.

15. The method according to claim 14, wherein the indication information for a PRS comprises one of:
the first frequency band indication, indicating a frequency layer of the PRS to be positioning reference signal bandwidth aggregated;
the first frequency band combination indication, indicating a frequency layer combination of the PRS capable of being positioning reference signal bandwidth aggregated; and
the first priority information, indicating a priority of the frequency layer combination of the PRS.

16. The method according to claim 14, wherein the indication information for an SRS comprises one of:
the first frequency band indication, indicating a carrier of the SRS to be positioning reference signal bandwidth aggregated;
the first frequency band combination indication, indicating a carrier combination of the SRS capable of being positioning reference signal bandwidth aggregated; and
the first priority information, indicating a priority of the carrier combination of the SRS.

17. The method according to claim 12, wherein the indication information is carried in a New Radio Positioning Protocol Type (NRPPa) message.

18. The method according to claim 17, wherein the NRPPa message is a positioning information request message.

19. The method according to any one of claims 12 to 18, wherein the indication information comprises:
a frequency band number;
an offset relative to a reference frequency value and/or a bandwidth; and
an identifier of a bandwidth part (BWP).

20. The method according to any one of claims 12 to 19, wherein the method further comprises:
determining a positioning reference signal configuration based on the indication information; wherein the positioning reference signal configuration is used for a transmission of the positioning reference signal.

21. An information processing method, performed by a terminal, comprising:
sending assistance information; wherein the assistance information is used for a core network device to generate indication information; and the indication information indicates positioning reference signal bandwidth aggregation.

22. The method according to claim 21, wherein the method further comprises:
receiving a positioning reference signal configuration generated based on the indication information.

23. The method according to claim 21 or 22, wherein the assistance information comprises at least one of:
a second frequency band indication, indicating a frequency layer and/or carrier for which the terminal expects or supports positioning reference signal bandwidth aggregation;
a second frequency band combination indication, indicating a frequency layer combination and/or carrier combination for which the terminal expects or supports positioning reference signal bandwidth aggregation; and
second priority information, indicating a priority of the frequency layer combination and/or the carrier combination.

24. An information processing apparatus, comprising:
a first sending module, configured to send indication information to an access network device, wherein the indication information indicates positioning reference signal bandwidth aggregation.

25. An information processing apparatus, comprising:
a receiving module, configured to receive indication information, wherein the indication information indicates positioning reference signal bandwidth aggregation.

26. An information processing apparatus, comprising:
a second sending module, configured to send assistance information; wherein the assistance information is used for a core network device to generate indication information; and the indication information indicates positioning reference signal bandwidth aggregation.

27. A communication device, comprising a processor, a transceiver, a memory, and an executable program stored in the memory and capable of being run by the processor, wherein the processor, when running the executable program, executes the information processing method as provided in any one of claims 1 to 11, 12 to 20, or 21 to 23.

28. A computer storage medium, wherein the computer storage medium stores an executable program, and the executable program, when being executed by a processor, implements the information processing method provided in any one of claims 1 to 11, 12 to 20, or 21 to 23.
